# EUROPÄISCHE PATENTSCHRIFT

(11) **EP 2 464 266 B1**
(45) Veröffentlichungstag und Bekanntmachung des Hinweises auf die Patenterteilung: **10.07.2013**
(21) Anmeldenummer: 10704080.0
(22) Anmeldetag: 11.02.2010
(51) Int. Cl.: A47J 42/40, A47J 42/42

(54) **MAHLGUTBEHÄLTER**
GRINDER CONTAINER
CONTENANT POUR PRODUIT MOULU

(30) Priorität: 12.08.2009 CH 12502009
(43) Veröffentlichungstag der Anmeldung: 20.06.2012
(73) Patentinhaber: PI-Design AG, 6234 Triengen (CH)
(72) Erfinder: BODUM, Jørgen, 6045 Meggen (CH)
(74) Vertreter: Detken, Andreas
(86) Internationale Anmeldenummer: PCT/CH2010/000038
(87) Internationale Veröffentlichungsnummer: WO 2010/048737

(56) Entgegenhaltungen:
- DE-B1- 1 607 526
- US-A- 3 221 997

## Beschreibung

### TECHNISCHES GEBIET

Die vorliegende Erfindung betrifft einen Mahlgutbehälter zum Einsetzen in eine Kaffeemühle, mit einem eine zentrale Einfüllöffnung aufweisenden Deckel, der mit einem peripheren Deckelrand einem Öffnungsrand des Mahlgutbehälters aufliegt und von dem in Abstand zum peripheren Deckelrand ein umlaufender Steg in das Innere des Mahlgutbehälters abragt und der Innenseite einer Behälterwand des Mahlgutbehälters gegenübersteht.

### STAND DER TECHNIK

Bei vielen herkömmlichen Kaffeemühlen mit einem Mahlgutbehälter aus Kunststoff wird das Kaffeepulver elektrostatisch aufgeladen, was bei nachfolgenden Operationen häufig eine unbeabsichtigte Verschleppung von anhaftendem Kaffeepulver mit entsprechenden Verunreinigungen zur Folge hat. Bei Verwendung von Mahlgutbehältern aus Glas oder Metall kann dieser Effekt stark reduziert werden.

Mahlgutbehälter aus Glas weisen jedoch eine relativ grosse Masstoleranz in der Höhe auf, so dass mit einem Spalt zwischen Mahlgutbehälter und Kaffeemühle zu rechnen ist. Durch diesen Spalt kann Kaffeepulver austreten, was wiederum zu einer ungewollten Verschleppung von Kaffeepulver ausserhalb des Behälters führt.

DE 16 07 526 B1 offenbart eine Mahlwerkmühle, insbesondere eine Kaffeemühle, deren Mahlwerk in einem von einem Mahlgehäuse gebildeten Mahlraum angeordnet ist. Dieser weist eine den seitlichen Austrag des gemahlenen Gutes in einen lösbar an einem Gerätgehäuse anbringbaren Aufangbehälter gestattende Austragsöffnüng auf. Dabei ist der Auffangbehälter mit einem vorspringend ausgebildeten Einlauf versehen, in den Teile des Mahlwerks ragen.

### DARSTELLUNG DER ERFINDUNG

Der vorliegenden Erfindung liegt die Aufgabe zugrunde, einen für einen Mahlgutbehälter der eingangs genannten Art geeigneten Deckel zu schaffen, der relativ grosse Masstoleranzen in der Höhe von Mahlgutbehältern ausgleichen kann und -- in einer Kaffeemühle eingesetzt -- eine dichte Verbindung zwischen Kaffeemühle und Deckel im Bereich der Einfüllöffnung im Deckel sicherstellt.

Zur erfindungsgemässen Lösung der Aufgabe führt, dass der Deckel zum Ausgleich von Masstoleranzen in der Höhe von Mahlgutbehältern aus einem verformungssteifen, aus einem harten Kunststoffmaterial gefertigten, zentralen Deckelteil und aus einem mit dem zentralen Deckelteil verbundenen, den umlaufenden Steg umfassenden, elastisch verformbaren Deckelrandteil aus einem weichen Gummimaterial besteht.

Der Mahlgutbehälter ist im allgemeinen zylinderförmig mit einem kreisförmigen Öffnungsrand, jedoch sind auch andere Behälterquerschnitte denkbar.

Zur besseren Abdichtung zwischen Deckel und Mahlgutbehälter kann vom freien Ende des umlaufenden Steges eine gegen die Innenseite der Behälterwand des Mahlgutbehälters gerichtete, umlaufende Dichtlippe abragen.

Bei einer bevorzugten Ausführungsform sind das Deckelrandteil und das zentrale Deckelteil über eine Nut/Feder-Verbindung verbunden, wobei die Nut/Feder-Verbindung zweckmässig durch Umspritzen des zentralen Deckelteils mit dem weichen Gummimaterial des Deckelrandteils gebildet ist. Eine andere Möglichkeit besteht in einer Verklebung der Nut/Feder-Verbindung.

Der Mahlgutbehälter besteht bevorzugt aus Glas, insbesondere aus Borsilikatglas.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen;
- Fig. 1: eine Schrägsicht von oben auf einen Mahlgutbehälter mit aufgesetztem Deckel;
- Fig. 2: eine Schrägsicht von oben auf den Deckel des Mahlgutbehälter von Fig. 1;
- Fig. 3: einen Längsschnitt durch den Mahlgutbehälter von Fig. 1;
- Fig. 4: einen Längsschnitt durch den in eine Kaffeemühle eingesetzten Mahlgutbehälter von Fig. 1;
- Fig. 5: ein vergrössertes Detail einer ersten Ausführungsform eines Deckels im unbelasteten Zustand gemäss Fig. 3;
- Fig. 6: das vergrösserte Detail von Fig. 5 im belasteten Zustand gemäss Fig. 4;
- Fig. 7: ein vergrössertes Detail einer zweiten Auflührungsfbrm eines Deckels im unbelasteten Zustand gemäss Fig. 3;
- Fig. 8: das vergrösserte Detail von Fig. 7 im belasteten Zustand gemäss Fig. 4.

### BESCHREIBUNG BEVORZUGTER AUSFÜHRUNGSFORMEN

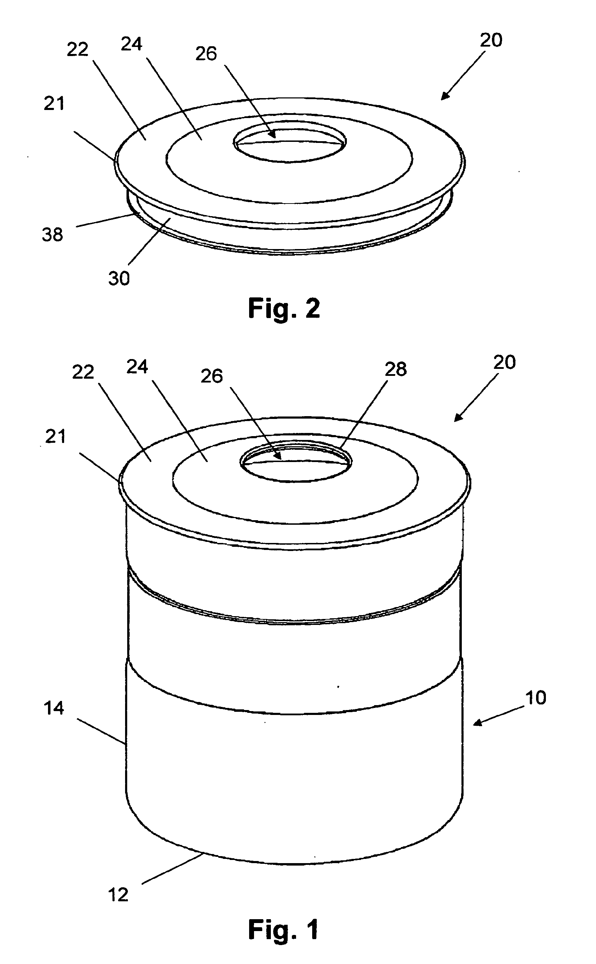

Ein in den Fig. 1 bis 3 dargestellter Mahlgutbehälter 10 weist einen Boden 12 und eine vom Boden 12 aufragende, im wesentlichen zylinderförmige Behälterwand 14 mit einem die Behälterwand 14 abschliessenden, eine Behälteröffnung 16 begrenzenden Öffnungsrand 18.

Ein dem Mahlgutbehälter 10 aufgesetzter Deckel 20 ist zweiteilig aufgebaut und umfasst ein zentrales Deckelteil 24 mit einer zentralen, von einem Öffnungsrand 28 begrenzten Einfüllöffnung 26 und ein an das zentrale Deckelteil 24 anschliessendes und mit diesem über eine gegebenenfalls verklebte Nut/Feder-Verbindung 23 verbundenes Deckelrandteil 22, das mit einem peripheren Deckelrand 21 dem Öffnungsrand 18 der Behälterwand 14 aufliegt und diese seitlich geringfügig überragt. In Abstand zum peripheren Deckelrand 21 ragt vom Deckelrandteil 22 ein umlaufender Steg 30 im Wesentlichen senkrecht nach innen ab und liegt der zylindrischen Behälterwand 14 des Mahlgutbehälters 10 im Bereich der Behälteröffnung 16 in kurzem Abstand gegenüber. Das zentrale Deckelteil 24 ist verformungssteif und besteht aus einem harten Kunststoffmaterial. Das Deckelrandteil 22 mit dem umlaufenden Steg 30 besteht aus einem elastischen, weichen Gummimaterial.

Das zentrale Deckelteil 24 weist eine im Bereich des Übergangs vom Deckelrandteil 22 zum zentralen Deckelteil 24 beginnende und am Öffnungsrand 28 der Einfüllöffnung 26 endende Wölbung auf. Im unbelasteten Zustand überragt der Öffnungsrand 28 der Einfüllöffnung 26 den Öffnungsrand 28 der Behälteröffnung 16 um ein Mass al.

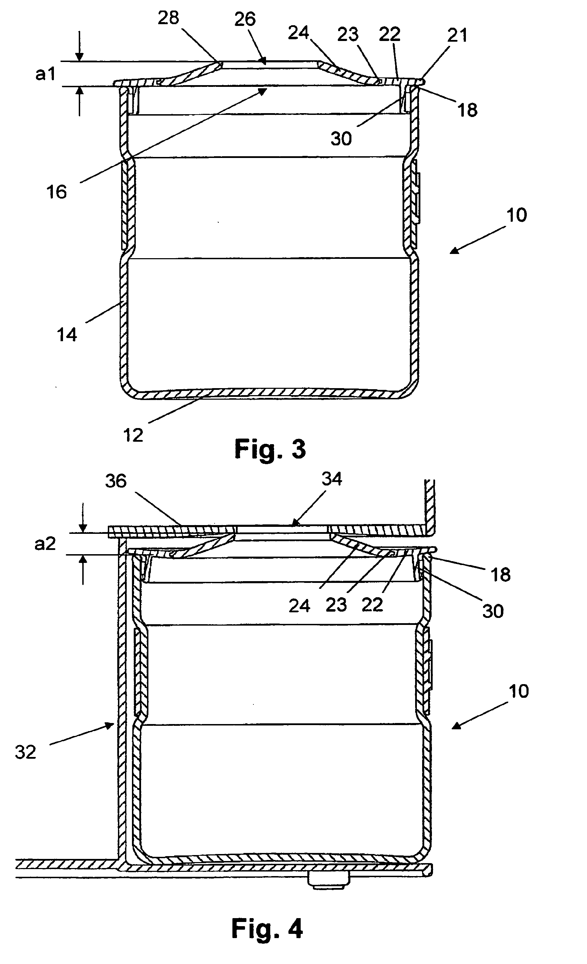

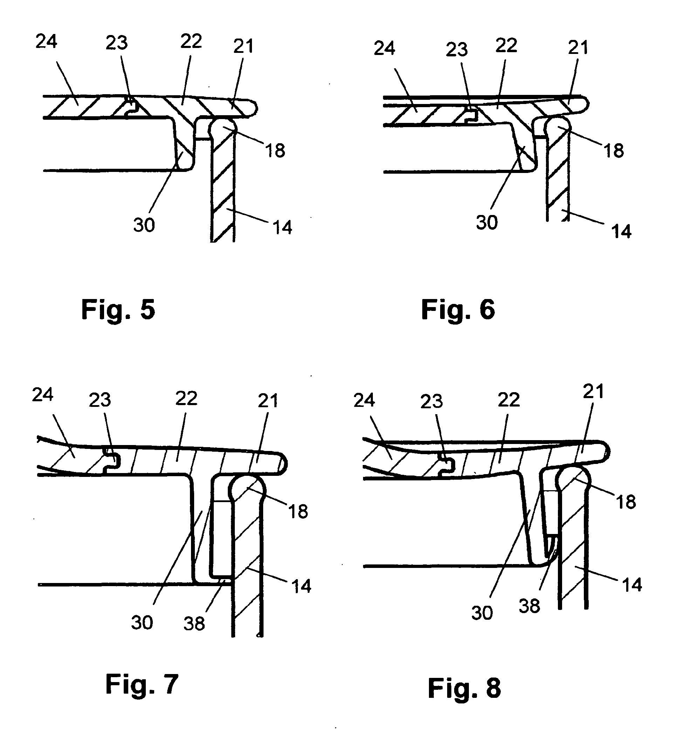

Wie in Figur 4 gezeigt, wird beim Einsetzen des Mahlgutbehälters 10 mit aufgesetztem Deckel 20 in ein Aufnahmeteil 32 einer nicht näher dargestellten Kaffeemühle das zentrale Deckelteil 24 mit der zentralen Einfüllöffnung 26 von einer mit einer Auslassöffnung 34 für gemahlenen Kaffee versehenen Platte 36 so überdeckt, dass die Auslassöffnung 34 und die zentrale Einfüllöffhung 26 übereinanderliegen, wobei die Platte 36 gleichzeitig das zentrale Deckelteil 24 nach unten auf den Mahlgutbehälter 10 drückt. In Abhängigkeit von der Höhe des Mahlgutbehälters 10 innerhalb vorgegebener Toleranzgrenzen reduziert sich das Mass a1 -- der vertikale Abstand des Öffnungsrandes 28 der Einfüllöffnung 26 des zentralen Deckelteils 24 zum Öffnungsrand 18 des Mahlbehälters 10 -- auf ein kleineres Mass a2, entsprechend einer über dem unteren Toleranzgrenzwert liegenden Höhe des Mahlbehälters 10. Dabei wird die auf das Deckelteil 24 wirkende Kraft auf das Deckelrandteil 22 übertragen, wobei dieses dem Öffnungsrand 18 des Mahlgutbehälters 10 jederzeit kraftschlüssig und dicht aufliegt. Die Auflage des peripheren Deckelrandes 21 auf dem Öffnungsrand 18 des Mahlgutbehälters 10 hat zur Folge, dass das Deckelrandteil 22 aus einer unbelasteten, horizontalen Lage (Fig. 5) in eine leicht gegen das Behälterinnere gerichtete, geneigte Lage übergeht, wobei sich das freie Ende des umlaufenden Steges 30 gegen die Innenseite der zylindrischen Behälterwand 14 des Mahlgutbehälters 10 bewegt (Fig. 6).

Bei einem den Fig. 7 und 8 gezeigten Variante eines Deckels 20 ragt vom freien Ende des umlaufenden Steges 30 eine Dichtlippe 38 im Wesentlichen horizontal nach aussen ab und berührt im unbelasteten Zustand (Fig. 7) mit ihrem freien Ende die Innenseite der Behälterwand 14 des Mahlgutbehälters 10. Dies führt zusätzlich zu einer Zentrierung und Lagestabilisierung des Deckels 20 auf dem Mahlgutbehälter 10.

Das Aufnahmeteil 32 mit der Platte 36 der Kaffeemühle und der Mahlgutbehälter 10 mit aufgesetztem Deckel 20 sind so aufeinander abgestimmt, dass der Deckel 20 bei in der Kaffeemühle eingesetztem Mahlgutbehälter 10 bei einer dem unteren Toleranzgrenzwert entsprechenden Höhe des Mahlgutbehälter 10 mit einer zur dichten Auflage der Platte 36 auf dem Deckel 20 gerade ausreichenden Kraft belastet wird.

Ist der Mahlgutbehälter 10 in einer Kaffeemühle eingesetzt, so wird das freie Ende des Steges 30 im belasteten Zustand des Deckels 20 gegen die Innenseite der zylindrische Behälterwand 14 des Mahlgutbehälters 10 bewegt. Dadurch wird die Dichtlippe 38 verformt und in einen vom Steg 30 und der Behälterwand 14 gebildeten Spalt X gedrückt, wobei sich eine weiter verbesserte Dichtung zwischen Deckel 20 und Mahlgutbehälters 10 ergibt.

**BEZUGSZEICHENLISTE**

| | |
|---|---|
| 10 | Mahlgutbehälter |
| 12 | Boden |
| 14 | Behälterwand |
| 16 | Behälteröffnung |
| 18 | Öffnungsrand von 16 |
| 20 | Deckel |
| 21 | peripherer Deckelrand |
| 22 | Deckelrandteil |
| 23 | Nut/Feder-Verbindung |
| 24 | Deckelteil |
| 26 | Einfüllöffnung |
| 28 | Öffnungsrand von 26 |
| 30 | umlaufender Steg |
| | |
| 32 | Aufnahmeteil |
| 34 | Auslassöffnung in 34 |
| 36 | Platte |
| 38 | Dichtlippe an 30 |
| a1, a2 | Abstand 18-28 |

## Patentansprüche

1. Mahlgutbehälter zum Einsetzen in eine Kaffeemühle, mit einem eine zentrale Einfüllöffnung (26) aufweisenden Deckel (20), der mit einem peripheren Deckelrand (21) einem Öffnungsrand (18) des Mahlgutbehälters (10) aufliegt und von dem in Abstand zum peripheren Deckelrand (21) ein umlaufender Steg (30) in das Innere des Mahlgutbehälters (10) abragt und der Innenseite einer Behälterwand (14) des Mahlgutbehälters (10) gegenübersteht,
**dadurch gekennzeichnet, dass**
der Deckel (20) zum Ausgleich von Masstoleranzen in der Höhe von Mahlgutbehältern aus einem verformungssteifen, aus einem harten Kunststoffmaterial gefertigten, zentralen Deckelteil (24) und aus einem mit dem zentralen Deckelteil (24) verbundenen, den umlaufenden Steg (30) umfassenden, elastisch verformbaren Deckelrandteil (22) aus einem weichen Gummimaterial besteht.

2. Mahlgutbehälter nach Anspruch 1, **dadurch gekennzeichnet, dass** vom freien Ende des umlaufenden Steges (30) eine gegen die Innenseite der Behälterwand (14) des Mahlgutbehälters (10) gerichtete, umlaufende Dichtlippe (38) abragt.

3. Mahlgutbehälter nach Anspruch 1 oder 2, **dadurch gekennzeichnet, dass** das Deckelrandteil (22) und das zentrale Deckelteil (24) über eine Nut/Feder-Verbindung (23) verbunden sind.

4. Mahlgutbehälter nach Anspruch 3, **dadurch gekennzeichnet, dass** die Nut/Feder-Verbindung (23) durch Umspritzen des zentralen Deckelteils (24) mit dem weichen Gummimaterial des Deckelrandteils (22) gebildet ist.

5. Mahlgutbehälter nach Anspruch 3, **dadurch gekennzeichnet, dass** die Nut/Feder-Verbindung (23) verklebt ist.

6. Mahlgutbehälter nach einem der Ansprüche 1 bis 5, **dadurch gekennzeichnet, dass** der Mahlgutbehälter (10) aus Glas, insbesondere aus Borsilikatglas, besteht.

## Claims

1. A grinder container for insertion into a coffee grinder, comprising a lid (20) which has a central introduction opening (26), the lid resting on an opening rim (18) of the grinder container (10) by way of a peripheral lid rim (21), a circumferential web (30) projecting from said lid, at a distance from the peripheral lid rim (21), into the interior of the grinder container (10) and being located opposite the inside of a wall (14) of the grinder container (10),
**characterized in that**
the lid (20), in order to compensate for dimensional tolerances in the height of grinder containers, comprises a deformation-resistant, central lid part (24), produced from a hard plastics material, and an elastically deformable lid-rim part (22) which is connected to the central lid part (29), which comprises the circumferential web (30) and which is made of a soft rubber material.

2. The grinder container as claimed in claim 1, **characterized in that** a circumferential stealing lip (38), which is directed toward the inside of the wall (14) of the grinder container (10), projects from the free end of the circumferential web (30).

3. The grinder container as claimed in claim 1 or 2, **characterized in that** the lid-rim part (22) and the central lid part (24) are connected via a groove/tongue connection (23).

4. The grinder container as claimed in claim 3, **characterized in that** the groove/tongue connection (23) is formed by virtue of the central lid part (24) being insert-molded with the soft rubber material of the lid-rim part (22).

5. The grinder container as claimed in claim 3, **characterized in that** the groove/tongue connection (23) is adhesively bonded.

6. The grinder container as claimed in one of claims 1 to 5, **characterized in that** the grinder container (10) consists of glass, in particular of borosilicate glass.

## Revendications

1. Récipient pour produit moulu destiné à être inséré dans un moulin à café, ledit récipient comportant un couvercle (20), doté d'une ouverture de remplissage centrale (26), qui repose au niveau d'un bord de couvercle périphérique (21) sur un bord d'ouverture (18) du récipient pour produit moulu (10) et duquel une nervure périphérique (30) fait saillie à l'intérieur du récipient de produit moulu (10) à distance du bord de couvercle périphérique (21) et fait face au côté intérieur d'une paroi de récipient (14) du récipient de produit moulu (10),
**caractérisé en ce que**
pour compenser les tolérances dimensionnelles dans le sens de la hauteur de récipients de produit moulu le couvercle (20) est constitué d'une partie de couvercle centrale (24), résistant à la déformation et réalisé à partir d'une matière plastique dure, et d'une partie formant bord de couvercle (22) déformable élastiquement qui est reliée à la partie de couvercle centrale (24), qui comporte la nervure périphérique (30) et qui est en une matière caoutchouteuse souple.

2. Récipient pour produit moulu selon la revendication 1, **caractérisé en ce qu'**une lèvre d'étanchéité périphérique (38), orientée vers le côté intérieur de la paroi de récipient (14) du récipient pour produit moulu (10), fait saillie de l'extrémité libre de la nervure périphérique (30).

3. Récipient pour produit moulu selon la revendication 1 ou 2, **caractérisé en ce que** la partie formant bord de couvercle (22) et la partie de couvercle centrale (24) sont reliées par une liaison à rainure et languette (23).

4. Récipient pour produit moulu selon la revendication 3, **caractérisé en ce que** la liaison à rainure et languette (23) est formée par extrusion de la partie de couvercle centrale (24) avec la matière caoutchouteuse souple de la partie formant bord de couvercle (22).

5. Récipient pour produit moulu selon la revendication 3, **caractérisé en ce que** la liaison à rainure et languette (23) est collée.

6. Récipient pour produit moulu selon l'une des revendications 1 à 5, **caractérisé en ce que** le récipient pour produit moulu (10) est en verre, notamment en verre au borosilicate.
